# EUROPÄISCHE PATENTANMELDUNG

(11) **EP 1 331 456 A1**
(43) Veröffentlichungstag der Anmeldung: **30.07.2003**
(21) Anmeldenummer: 02001717.4
(22) Anmeldetag: 24.01.2002
(51) Int. Cl.: F24F 11/00, F24F 12/00

(54) **Steuerungssystem und Verfahren zur Steuerung eines Lüftungsgeräts**

(71) Anmelder: SÜDDEUTSCHE ETNA-WERK GMBH, D-81675 München (DE)
(72) Erfinder: Hartwig, Manfred, 85567 Grafing (DE); Straub, Gerhard, 85598 Baldham (DE)
(74) Vertreter: Schurack, Eduard F.

(57) **Zusammenfassung**

Die Erfindung betrifft ein Steuerungssystem für ein Lüftungsgerät (1) zur Belüftung eines Raums (2), wobei dieses zumindest eine Messeinrichtung (T, P) zum Messen momentaner Ist-Werte mindestens einer belüftungsrelevanten Größe und eine mit der Messeinrichtung verbundene Regelungseinheit (R) umfasst, die ausgelegt ist, um mindestens einen, in dem Lüftungsgerät (1) vorgesehenen Ventilator (31, 32, 33) und/oder mindestens ein Schließelement für eine in dem Lüftungsgerät vorgesehene Öffnung (111, 112, 121, 122) zu steuern. Weiterhin betrifft die Erfindung ein Verfahren zum Steuern eines Lüftungsgeräts.

## Beschreibung

Die vorliegende Erfindung betrifft ein Steuerungssystem für ein Lüftungsgerät, insbesondere ein Steuerungssystem nach dem Oberbegriff von Patentanspruch 1, und ein Verfahren zur Steuerung eines Lüftungsgeräts.

Zur Belüftung von Räumen kann außer dem sogenannten Stoßlüften, bei dem ein Fenster geöffnet wird, um Frischluft in den Raum zu lassen, auch ein Lüftungsgerät verwendet werden. Lüftungsgeräte werden in der Regel manuell bedient oder anhand von Voreinstellungen (Tag-Betrieb, Nacht-Betrieb) in vorgegebene Betriebszustände gebracht. Der Nachteil solcher Lüftungsgeräte besteht allerdings darin, dass bei einem Wechsel von Umgebungsbedingungen nachjustiert werden muß. Scheint beispielsweise an einem Wintertag die Sonne durch ein großes Fenster in einen zu belüftenden Raum, so resultiert dies in einer höheren Raumtemperatur als an einem trüben Tag, sofern zwischenzeitlich nicht manuell nachjustiert wird.

Aufgabe der vorliegenden ist es daher, ein Steuerungssystem für ein Lüftungsgerät und ein Verfahren zur Steuerung eines Lüftungsgeräts zu schaffen, bei dem die Nachjustierungserfordernis reduziert ist.

Diese Aufgabe wird erfindungsgemäß gelöst durch ein Steuerungssystem für ein Lüftungsgerät zur Belüftung eines Raums, das zumindest eine Messeinrichtung zum Messen momentaner Ist-Werte mindestens einer belüftungsrelevanten Größe und eine mit der Messeinrichtung verbundene Regelungseinheit umfasst, die ausgelegt ist, um mindestens einen, in dem Lüftungsgerät vorgesehenen Ventilator und/oder mindestens ein Schließelement für eine in dem Lüftungsgerät vorgesehene Öffnung zu steuern.

Mit diesem Steuerungssystem können belüftungs- und/oder heizungsrelevante Größen der Umgebung erfasst werden und die Betriebsweise von Ventilatoren und/oder Schließelementen kann entsprechend den erhaltenen Informationen gesteuert werden.

In einer Ausführungsform umfasst die Messvorrichtung einen Anwesenheitsdetektor. Mittels diesem Detektor kann festgestellt werden, ob sich eine Person in dem Raum befindet. Ist dies der Fall, kann das Lüftungsgerät in einen vorgegebenen Modus gebracht werden. Der Anwesenheitsdetektor ist vorzugsweise in dem zu belüftenden Raum angeordnet und mit dem Lüftungsgerät elektrisch oder über Funk verbunden. Dadurch wird die Möglichkeit eröffnet, die Raumtemperatur auf einen vorgegebenen Wert zu bringen, der mit geringem Energiebedarf gehalten werden kann, also im Sommer eine höhere Temperatur, im Winter eine niedrigere Temperatur. Erst wenn durch den Anwesenheitssensor festgestellt wird, daß sich eine Person in dem Raum befindet, wird durch entsprechende Steuerung des Lüftungsgeräts eine voreinstellbare Raumtemperatur eingestellt, im Sommer also die Temperatur abgesenkt, im Winter angehoben.

In einer anderen Ausführungsform kann die Messvorrichtung alternativ oder zusätzlich eine C02-Messeinheit umfassen. Auch diese ist vorzugsweise in dem zu belüftenden Raum angeordnet. Mittels dieser Messeinheit kann die C02-Konzentration in dem zu belüftenden Raum erfasst werden und falls die Konzentration zu hoch ist, kann das Lüftungsgerät so gesteuert werden, dass Außenluft in den zu belüftenden Raum gefördert wird.

Weiterhin kann die Messvorrichtung eine Feuchte-Messeinheit umfassen. Mittels dieser kann der Feuchtegehalt entweder im Raum oder in einem der Luftströme in dem Lüftungsgerät bestimmt werden. Die Feuchte-Messeinheit ist vorzugsweise im Bereich der durch das Lüftungsgerät ausgegebenen Zuluft vorgesehen.

Weiterhin kann die Messvorrichtung eine Luftgeschwindigkeits-Messeinheit und/oder eine Windrichtungs-Messeinheit umfassen. Diese ist vorzugsweise an einer für die Luftzufuhr von außen vorgesehenen Öffnung des Lüftungsgeräts vorgesehen. Damit kann beispielsweise ermittelt werden, ob Druck oder Sog, ausgelöst insbesondere durch Wind, auf diese Öffnung wirkt. Wird dies festgestellt, kann der entsprechende Ventilator in seiner Leistung reduziert werden. Gegebenenfalls kann es sogar nötig sein, um den Energieverbrauch durch Aufheizung der Zuluft unter einem vorgebbaren Wert zu halten, das der Öffnung zugeordnete Schließelement zumindest teilweise zu schließen. Auch ist es erwünscht, daß die Strömungsgeschwindigkeit der als Zuluft an den Raum abgebenen Außenluft unter einem vorgebbarem Schwellwert gehalten, über dem die Zuluft als unangenehm empfunden wird,

Die Messvorrichtung kann weiterhin eine Sonnenstrahlungs-Messeinheit umfassen. Diese Sonnenstrahlungs-Messeinheit ist vorzugsweise an der Außenwand des zu beheizenden Raums vorgesehen.

Die der Erfindung zugrunde liegende Aufgabe wird weiterhin durch ein Verfahren zur Steuerung eines Lüftungsgeräts zur Belüftung von Räumen gelöst, wobei in dem Lüftungsgerät mindestens ein Ventilator und/oder mindestens ein Schließelement für eine in dem Lüftungsgerät angeordnete Öffnung angeordnet ist, wobei der mindestens eine Ventilator und/oder das mindestens eine Schließelement entsprechend momentaner Ist-Werte mindestens einer lüftungsrelevanten Größe, die mittels einer Messeinrichtung gemessen werden, gesteuert werden. Durch dieses Verfahren kann der Betriebszustand des Lüftungsgeräts an die gemessenen Ist-Werte lüftungsrelevanter Größen angepasst werden.

Vorzugsweise werden die von der Messeinrichtung gemessenen Werte einer Bearbeitung unterzogen, bevor die in dem Lüftungsgerät vorgesehene Ventilatoren und/oder Schließelemente für in dem Lüftungsgerät vorgesehene Öffnungen im Hinblick auf das Bearbeitungsergebnis gesteuert werden. Eine bevorzugte Bearbeitung der gemessenen Werte besteht in einem Vergleich mit vorgegebenen Soll-Werten. Bei Abweichung von einem Soll-Wert können die Ventilatoren und/oder Schließelemente im Hinblick auf die Einstellung des Soll-Werts geregelt werden.

In einer besonders bevorzugten Ausführungsform wird der Durchfluss von Luft in zumindest einem Teil des Lüftungsgeräts gemessen. Die Messung des Volumenstroms, beispielsweise in der Zuluftführung des Lüftungsgeräts, liefert eine genauere Steuerung im Vergleich mit der im Stand der Technik üblichen Steuerung abhängig vom Druck, insbesondere von einer Druckdifferenz vor und nach einem Ventilator. Der Volumenstrom ist nämlich abhängig von mehreren Einflüssen, wie der Temperatur und dem Druck auf die der entsprechenden Luftführung zugeordneten Öffnungen. Damit läßt sich beispielsweise die Strömungsgeschwindigkeit der dem Raum zugeführten Luft präzise unter einem vorgebbaren Schwellwert halten, über dem die Strömungsgeschwindigkeit als unangenehm empfunden wird. Auch läßt sich dadurch unnötiger Energieverbrauch zur Aufheizung von im Übermaß zugeführter Zuluft reduzieren.

Die Erfindung wird im Folgenden anhand der Zeichnungen genauer beschrieben, wobei die Zeichnungen Beispiele von Lüftungsgeräten darstellen, in denen das erfindungsgemäße Steuerungssystem und -verfahren eingesetzt werden können.

Es zeigen:
Figur 1: eine schematische Längsschnittansicht des mittleren Teils des erfindungsgemäßen Lüftungsgeräts;
Figur 2: eine schematische Querschnittansicht des erfindungsgemäßen Lüftungsgeräts;
Figur 3a bis e: eine Ausführungsform eines Lüftungsgeräts in verschiedenen Ansichten, wobei der Luftweg der Zuluft angedeutet ist;
Figur 4a bis e: eine Ausführungsform eines Lüftungsgeräts in verschiedenen Ansichten, wobei der Luftweg der Abluft angedeutet ist;
Figur 5a bis e: eine Ausführungsform eines Lüftungsgeräts in verschiedenen Ansichten, wobei der Luftweg der Umluft angedeutet ist;
Figur 6: eine schematisches Blockdiagramm, das die verschiedenen Luftströme andeutet; und
Figur 7: ein schematisches Schaltdiagramm, das schematisch die Regelungstechnik des Lüftungsgeräts darstellt.

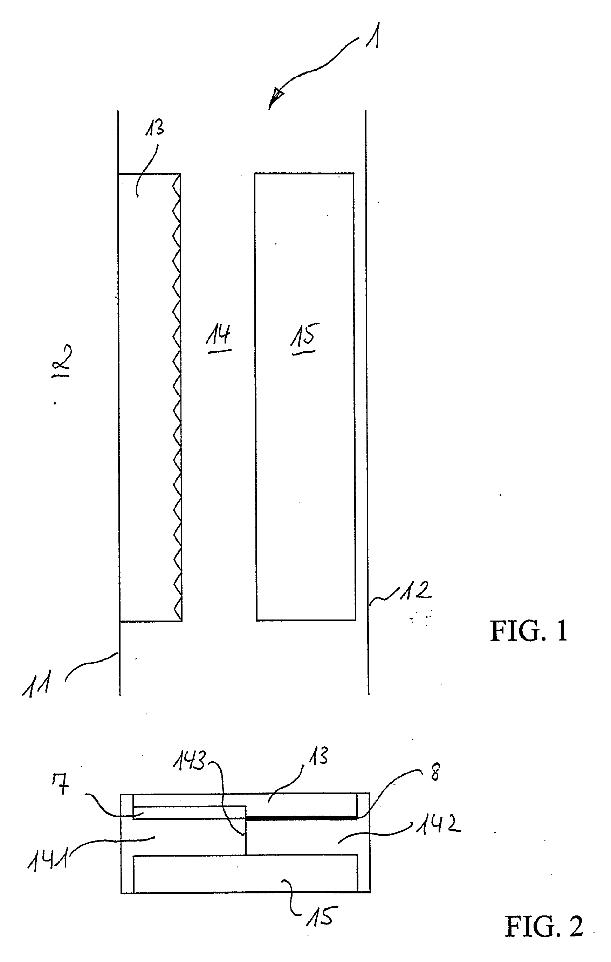

In Figur 1 ist eine schematische Längsschnittansicht des mittleren Bereichs eines Lüftungsgeräts 1 gemäß der vorliegenden Erfindung dargestellt. Auf der Innenseite 11 des Lüftungsgeräts 1, die dem zu belüftenden Raum 2 zugewandt ist, ist in der dargestellten Ausführungsform ein Radiator 13 vorgesehen. Dieser kann vorzugsweise den größten Bereich der Innenseite 11 des Lüftungsgeräts 1 bilden. An den Radiator 13 schließt sich in Richtung der Außenseite 12 des Lüftungsgeräts ein Kanal 14 an, durch den Luft passieren und gegebenenfalls an dem Radiator 13 entlang strömen kann. An den Kanal 14 schließt sich schließlich ein Wärmeübertragungselement 15 an, das von Luft durchströmt werden kann.

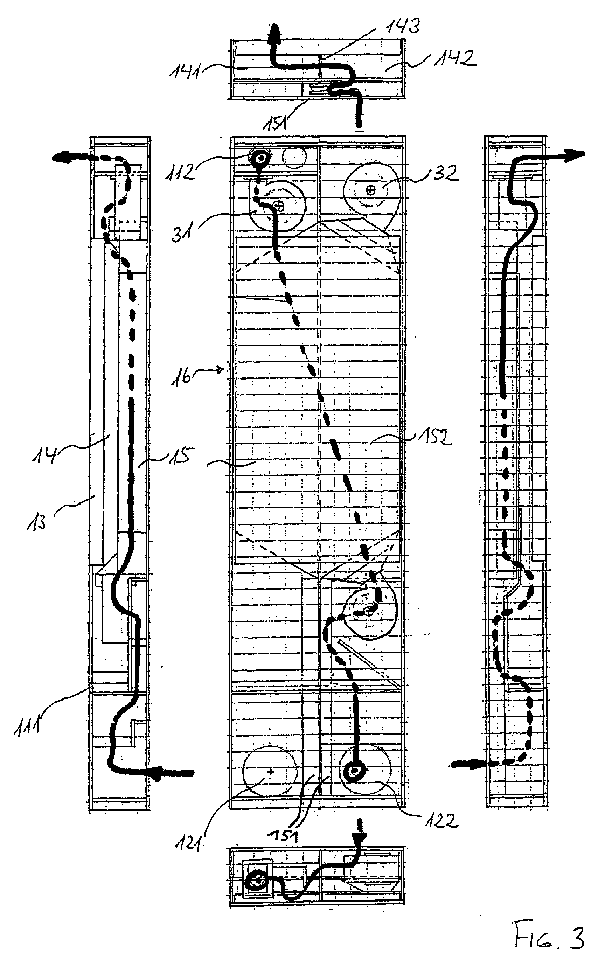

Während durch das Wärmeübertragungselement 15 die über die Außenseite 12 angesaugte Außenluft und die über die Innenseite 11 angesaugte Abluft geleitet werden, dient der Kanal 14 der Luftführung der von der Innenseite 11 angesaugten Abluft und der Umluft. Die genaue Luftführung in dem Lüftungsgerät 1 wird unter Bezugnahme auf die Figuren 3 bis 5 später detaillierter erläutert. Wie in Figur 2 zu erkennen ist, ist der Kanal 14 vorzugsweise zweigeteilt, so dass dieser zwei Kammern 141 und 142 umfasst, die sich in vertikaler Richtung des Lüftungsgeräts erstrecken. Die Kammern können, wie in Figur 2 angedeutet, durch eine Trennwand 143 gebildet werden. Diese Trennwand 143 kann isoliert sein, um einen Wärmeaustausch zwischen dem Luftstrom in den Kammern 141 und 142 zu verhindern. Der Radiator 13 weist in der dargestellten Ausführungsform an der Innenseite 11 des Lüftungsgeräts eine glatte Oberfläche und an der dem Kanal 14 zugewandten Seite teilweise eine berippte Oberfläche 7 auf. Der berippte Bereich 7 des Radiators 13 erstreckt sich in der Kammer 141, während der Bereich 8, in dem der Radiator mit der anderen Kammer 142 in Kontakt steht, vorzugsweise isoliert ist. In der Kammer 141 kann daher die Luft an einer vergrößerten Oberfläche des Radiators 13 entlang geführt werden. Wird der Radiator 13 als Heizelement eingesetzt, erfolgt über die aufgrund der Rippen vergrößerte Oberfläche des Radiators 13 eine zusätzliche Aufheizung der durch die Kammer 141 strömenden Luft. Diese Kammer 141 wird vorzugsweise zur Führung der Umluft verwendet, die aus dem zu belüftenden Raum 2 entnommen und in diesen wieder eingeführt wird. Auf diese Weise kann die Wärmeabgabe des Radiators gegenüber der reinen Konvektion und Strahlung über die Innenseite 11 an den zu belüftenden Raum durch die erzwungene Konvektion, die in der Kammer 141 erfolgt, vergrößert werden.

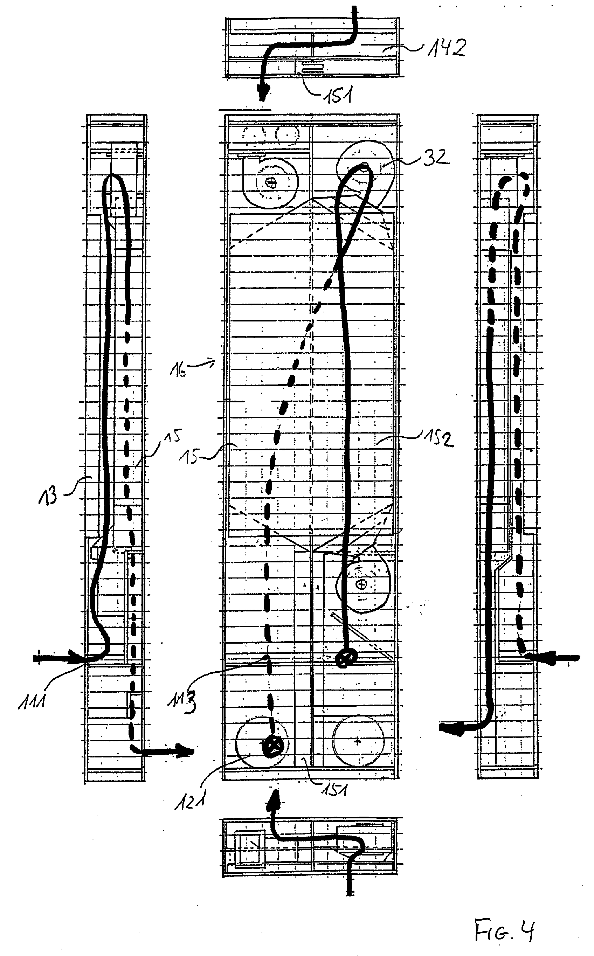

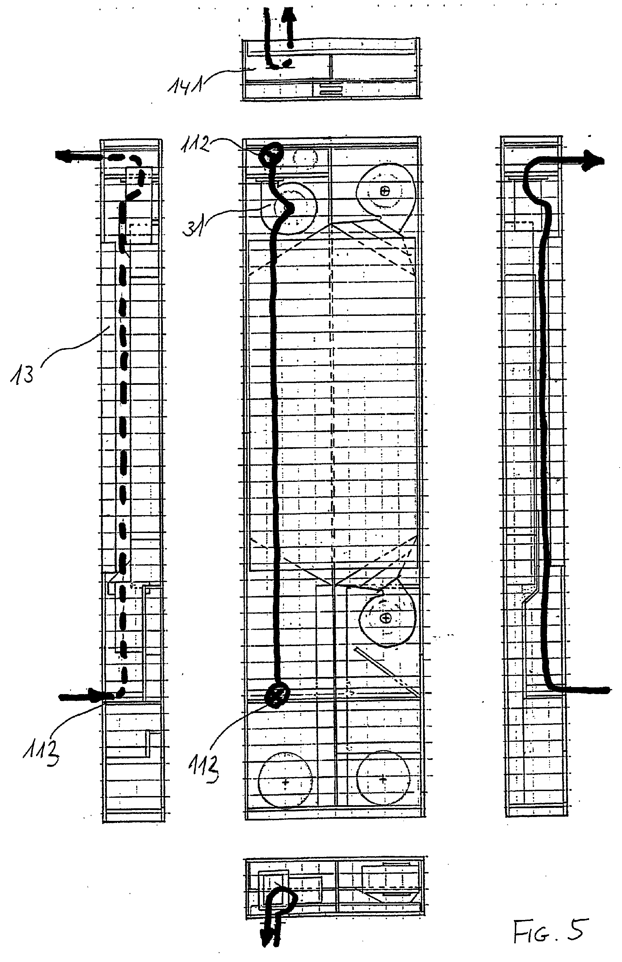

Unter Bezugnahme auf die Figur 3 soll nun zunächst der Aufbau einer Ausführungsform eines erfindungsgemäßen Lüftungsgeräts 1 beschrieben werden. In den Figuren 4 und 5 sind die gleichen Ansichten wie in Figur 3 gezeigt, so dass nur die für die Beschreibung wesentlichen Teile in diesen Figuren beziffert sind. Das Lüftungsgerät 1, das beispielsweise eine Höhe von über 1,5m, vorzugsweise eine Höhe von 2m, eine Breite von beispielsweise 0,5m und eine Tiefe von beispielsweise 0,2m aufweisen kann, ist in Figur 3 jeweils als Querschnitt in fünf Ansichten gezeigt, und zwar in Frontansicht, Ansicht von rechts und von links sowie Ansicht von oben und von unten. Im oberen Bereich des Lüftungsgeräts sind zwei Ventilatoren 31 und 32 vorgesehen, die über die Breite des Lüftungsgeräts gesehen nebeneinander angeordnet sind. Unterhalb dieser Ventilatoren erstreckt sich über einen großen Bereich der Höhe des Lüftungsgeräts 1 der zentrale Bereich 16. In diesem zentralen Bereich ist an der Innenseite 11 des Lüftungsgeräts 1 der Radiator 13, daran anschließend der Kanal 14 mit den beiden Kammern 141 und 142 und schließlich an die Außenseite 12 des Lüftungsgeräts 1 angrenzend ein Wärmeübertragungselement 15 angeordnet. Unterhalb des zentralen Bereiches ist ein weiterer Ventilator 33 diagonal versetzt zu dem Ventilator 31 angeordnet. Unterhalb des Ventilators 33 ist ein weiterer Teil 151 des Wärmeübertragungselements 15 vorgesehen. Dieser Teil 151 des Wärmeübertragungselements 15, der als Kondensator dienen kann, erstreckt sind von dem zentralen Bereich 16 des Lüftungsgeräts nach unten bevorzugt bis zumindest auf eine Höhe, auf der an der Außenseite 12 des Lüftungsgeräts zwei Öffnungen 121 und 122 vorgesehen sind. An der Innenseite 11 des Lüftungsgeräts 1 sind ebenfalls Öffnungen für Luft vorgesehen. Zwei dieser Öffnungen 111, 113 befinden sich ebenfalls unterhalb des zentralen Bereichs 16, jedoch vorzugsweise oberhalb der Höhe der Öffnungen 121 und 122. Die Öffnungen 111, 113 sind über die Breite des Lüftungsgeräts nebeneinander angeordnet. Die andere Öffnung 112 an der Innenseite 11 des Lüftungsgeräts ist im oberen Bereich oberhalb des zentralen Bereiches 16 und besonders bevorzugt oberhalb des Ventilators 31 vorgesehen.

In dem Kanal 14, insbesondere in der Kammer 141, können Düsen vorgesehen sein, über die Kondensat, das an dem Teil 151 des Wärmeübertragungselements 15 erzeugt und gegebenenfalls in einem am Boden des Lüftungsgeräts 1 vorgesehenen Auffangbehälter dargestellt) aufgefangen wurde, in die Kammer 141 und vorzugsweise auf die Rückseite des Radiators 13 gesprüht werden kann. Die Düsen können aber auch beispielsweise in der Kammer 142 vorgesehen sein, um die Luftfeuchtigkeit der Umluft zu erhöhen.

In Figur 3 ist nun der Luftweg der Zuluft durch Pfeile angedeutet. Der Übergang von einer durchgezogenen Linie in eine gestrichelte Linie deutet an, daß sich der Luftstrom unterhalb der Zeichnungsebene bewegt. Wie sich aus Figur 3 ergibt, tritt über die Öffnung 122 Außenluft in das Lüftungsgerät 1 ein.

Diese strömt zunächst an einem ersten Bereich 151 des Wärmeübertragungselements 15 vorbei und wird dann über den Zuluftventilator 33 in einen zweiten Bereich 152 des Wärmeübertragungselements 15, das beispielsweise einen Plattenwärmeübertrager darstellen kann, geleitet. Die Außenluft durchströmt diesen vorzugsweise in diagonaler Richtung und gelangt so zu dem Umluftventilator 31, über den die behandelte Außenluft als Zuluft über die Öffnung 112 in den zu belüftenden Raum geleitet wird.

Figur 4 zeigt den Luftweg der Abluft in dem Lüftungsgerät 1. Die Abluft tritt über die Öffnung 111, die sich im unteren Bereich der Innenseite 11 des Lüftungsgeräts 1 befindet, in dieses ein. Die Öffnung 111 wird bevorzugt im unteren Bereich der Innenseite angeordnet, da die Luft, die sich dort in dem Raum 2 befindet, bereits kühler und staubreicher ist. Es wird also vermieden, dass warme Luft aus dem Raum ausgetragen wird, wodurch die Anforderung an ein Heizelement 13 steigen würden. Durch den höheren Staubgehalt in der Luft kann weiterhin sichergestellt werden, dass die Luft, wenn diese in das Lüftungsgerät eintritt und dort durch einen Filter geleitet wird, effizient gereinigt wird. Schließlich wird durch das Anordnen der Abluftöffnung im unteren Bereich erzielt, dass die Abluft nicht außerhalb des Lüftungsgeräts mit der Zuluft vermischt wird, wodurch die Effizienz des Lüftungsgeräts verringert würde.

Von der Öffnung 111 tritt die Luft in die Kammer 142 des Kanals 14 ein und durchströmt diesen über seine gesamte Länge, die der Länge des zentralen Bereiches 16 in etwa entspricht. Dort tritt die Luft in den Abluftventilator 32 ein, der diese dann in das Wärmübertragungselement 15 leitet. In der dargestellten Ausführungsform durchströmt die Abluft den Bereich 152 des Wärmeübertragungselements 15 diagonal in einer Richtung, die zu der Strömungsrichtung der Zuluft in dem Wärmübertragungselement 15 quer liegt. Nachdem die so behandelte Abluft den Bereich 152 des Wärmübertragungselements 15 verlassen hat, strömt diese an dem Teil 151 des Wärmübertragungselements 15 entlang und gelangt über die Öffnung 121 als Fortluft in die Umgebung.

In Figur 5 ist der Luftweg der Umluft in dem Lüftungsgerät 1 gezeigt und wird im Folgenden beschrieben. Über eine Öffnung 113 an der Innenseite 11 des Lüftungsgeräts 1 tritt Umluft in das Lüftungsgerät ein. Von dort strömt diese in die Kammer 141 des Kanals 14 und strömt über die gesamte Höhe des Radiators 13 an diesem entlang. Nach dem Austritt aus dem Kanal 14 gelangt die Umluft in den Umluftventilator 31, wo sie mit der Zuluft gemischt wird und über die Öffnung 112 an den zu belüftenden Raum 2 abgegeben wird.

Die Gesamthöhe des Lüftungsgeräts wird vorzugsweise so ausgelegt, dass die Druckdifferenz zwischen den Einlass- und Auslassöffnungen bei sich erwärmender bzw. abkühlender Zuluft, Umluft und Abluft mehr als 2 Pa beträgt.

Mit der Luftführung, die unter Bezug auf die Figuren 3, 4 und 5 beschrieben wurde, kann im Hinblick auf die in dem zu belüftenden Raum einzustellenden Bedingungen eine angepaßte Behandlung der Luft erfolgen. Wird beispielsweise der Radiator als Heizelement, z.B. als Warmwasser-Radiator, betrieben, und wird davon ausgegangen, dass die Temperatur in dem zu belüftenden Raum 2 höher ist als die der Umgebung, so erfolgen in dem Lüftungsgerät die folgenden Behandlungen der verschiedenen Luftströme: Die Außenluft, die in das Lüftungsgerät 1 über die Öffnung 122 eintritt, tritt über den Bereich 151 des Wärmübertragungselements 15 mit der aus dem zu belüftenden Raum 2 stammenden Abluft, die bereits durch das Wärmübertragungselement 15 geströmt ist, in thermischen Kontakt. Dadurch kann die Zuluft bereits zu einem gewissen Grad aufgewärmt werden. Anschließend kann der Zuluft weitere Wärme von der Abluft zugeführt werden und zwar in dem Bereich 152 des Wärmübertragungselements 15, indem die Zuluft und die Abluft in der dargestellten Ausführungsform quer zueinander geführt werden. Anschließend gelangt die bereits vorgeheizte Zuluft in den Umluftventilator, wo sie mit der, wie später beschrieben, behandelten Umluft vermischt wird. Beim Eintritt in den zu belüftenden Raum weist die Zuluft also bereits eine gegenüber der Außenluft erhöhte Temperatur auf, wodurch die Anforderungen an den Radiator 13, der als Heizelement fungiert, erniedrigt werden. Dieser kann also kleiner ausgestaltet werden, als ein herkömmlicher Heizkörper, bei dem die gesamte Zuluft in dem zu belüftenden Raum 2 von der Außentemperatur auf die Raumtemperatur gebracht werden muss.

Die Abluft verlässt bei Raumtemperatur den zu belüftenden Raum 2 und strömt durch die Kammer 142. Da diese Luft der Umgebung zugeführt werden soll, ist zu vermeiden, dass diese Wärme von dem Radiator 13 aufnimmt. Zu diesem Zweck kann der Radiator im Bereich der Kammer 142 an der der Kammer 142 zugewandten Seite 8 isoliert sein. Somit gelangt die Abluft bei einer Temperatur, die etwa der Raumtemperatur entspricht, zu dem Abluftventilator 32. Von dort wird die Abluft in das Wärmübertragungselement 15 geleitet, zunächst in den Bereich 152, wo diese einen gewissen Teil ihrer Wärme an die quer dazu geführte Zuluft abgibt. Die so abgekühlte Abluft wird dann an dem Bereich 151 des Wärmübertragungselements 15 entlanggeführt, wo sie weitere Wärme an die Zuluft abgeben kann. Die Abluft aus dem Raum 2 verlässt also das Lüftungsgerät als Fortluft bei einer Temperatur, die unterhalb der Raumtemperatur, und vorzugsweise weit unterhalb der Taupunkttemperatur liegt.

Die Umluft tritt bei Raumtemperatur der unteren Raumregionen in das Lüftungsgerät ein und wird in der Kammer 141 an dem Radiator 13 entlanggeführt, wo diese Wärme von dem Radiator 13 aufnehmen kann. Wenn der Radiator im Bereich der Kammer 141 an der der Kammer 141 zugewandten Seite 7 eine vergrößerte Oberfläche, z.B. durch an dieser Seite vorgesehene Rippen, aufweist, kann die Wärmezufuhr an die Umluft noch zusätzlich gesteigert werden. Die so vorgeheizte Umluft wird in dem Umluftventilator 31 mit der bereits erwärmten Außenluft vermischt, wodurch ein erwärmter Zuluftstrom erzeugt wird. Bei normalem Bedarf an Heizleistung genügt hierfür der Antrieb durch den thermischen Auftrieb. Bei erhöhtem Leistungsbedarf führt der Antrieb durch den Ventilator 31 zu erzwungener Konvektion und damit zu stark vergrößertem Wärmeübergang, wodurch die Leistungsabgabe des Radiators beträchtlich, typisch um den Faktor 2 bis 3, gesteigert wird.

Wird der Radiator 13 als Kühlelement betrieben, indem beispielsweise Kaltwasser verwendet wird, und wird davon ausgegangen, dass die Temperatur in dem zu belüftenden Raum geringer ist als die Umgebungstemperatur (wie beispielsweise im Sommer), so werden die Temperaturen der einzelnen Luftströme in dem Lüftungsgerät 1 wie folgt eingestellt. Die kühle Abluft wird in dem Wärmeübertragungselement 15 und über den Bereich 151 des Wärmübertragungselements 15 durch die wärmere Außenluft aufgewärmt, wodurch die Außenluft einen Teil ihrer Wärme abgibt. Zusätzlich wird die Umluft, die in der Kammer 141 an dem Radiator entlang strömt, durch diesen abgekühlt. Die mit der abgekühlten Außenluft vermischte gekühlte Umluft wird dann über den Umluftventilator 31 in den Raum geleitet. In ähnlicher Weise kann zu warme Raumluft auch bei noch wärmerer Außenluft allein im Umluftbetrieb abgekühlt werden.

Das erfindungsgemäße Lüftungsgerät nutzt den Umluftbetrieb mit Radiator nicht nur zur Heizung mittels Strahlung und Konvektion an der Innenseite 11, sondern auch zur Unterstützung der Durchmischung der Raumluft und damit zur gezielten Änderung der Temperatur des Raums, im Gegensatz zum Stand der Technik insbesondere auch der Temperatur der unteren Schichten des Raums. Im Vergleich mit dem Stand der Technik wird insbesondere die Kühlung durch die Möglichkeit eines aktiven Vorbeileitens von Luft, gegebenenfalls durch Ventilatorunterstützung, in der Kammer 143 begünstigt. Dies kann den Verzicht auf eine herkömmliche Klimaanlage ermöglichen.

Neben der thermischen Behandlung der Luft und der Durchmischung in dem Lüftungsgerät 1 kann die Luft in dem Lüftungsgerät 1 auch in anderer Hinsicht behandelt werden. So kann beispielsweise deren Staubgehalt und Feuchtegehalt in dem Lüftungsgerät eingestellt werden.

Um Staubpartikel und andere in der Luft enthaltene Verunreinigungen aus der Luft abzutrennen, können in dem Lüftungsgerät 1 Filter vorgesehen sein. Diese sind vorzugsweise im Bereich der Öffnung 122, über die die Außenluft in das Lüftungsgerät 1 eintritt, und im Bereich der Öffnung 113, über die die Umluft in das Lüftungsgerät 1 eintritt, vorgesehen. Dadurch kann mit dem Lüftungsgerät zum einen verhindert werden, dass Verunreinigungen von außen in den Raum 2 eintreten und zum anderen können aus dem Raum 2 stammende Verunreinigungen abgetrennt werden. Das Lüftungsgerät sorgt also nicht nur für eine gute Durchmischung der Luft in dem Raum 2 und eine Zufuhr von Frischluft, sondern reinigt gleichzeitig auch die in dem Raum 2 befindliche Luft im Umluftbetrieb.

Der Feuchtegehalt in der Luft kann über geeignete Luftführung in dem Lüftungsgerät 1 geregelt werden. Dies erfolgt beispielsweise über gezielte Kondensation der Luftfeuchte in dem Lüftungsgerät. Vorzugsweise erfolgt die Kondensation in dem Bereich 151 des Wärmübertragungselements 15. Dieser stellt vorzugsweise einen offenen Wärmetauscher dar und erlaubt so die Behandlung des durch diesen erhaltenen Kondensats in dem Lüftungsgerät 1. Beispielsweise kann sowohl die Kondensatoroberfläche als auch das erhaltene Kondensat mittels geeigneter Vorrichtungen mit UV-Strahlen bestrahlt werden. Dadurch wird das Kondensat sterilisiert und eventuell darin enthaltene Sporen abgetötet. Es kommt also nicht zu Schimmelbildung. Diese kann bei Lüftungsgeräten des Stands der Technik nicht vermieden werden, so dass in den bekannten Lüftungsgeräten eine Kondensation weitestgehend vermieden werden muss. In dem erfindungsgemäßen Lüftungsgerät hingegen wird die Kondensation gezielt bewirkt. Dies wird insbesondere durch eine Temperatursenkung in dem Abluftstrom bis unter den Kondensationspunkt, erzielt. Da Wasser eine hohe Verdampfungswärme aufweist, läßt sich durch das bewußte Kondensieren, wie dies mit dem erfindungsgemäßen Lüftungsgerät ermöglicht wird, Energie in hohem Maße aus der Abluft zurückgewinnen. Das erhaltene Kondensat kann dann zur Einstellung einer gewünschten Luftfeuchtigkeit in dem Raum 2 verwendet werden. Es kann in dem Fall, in dem die Luftfeuchtigkeit in dem Raum 2 gesenkt werden soll, über Düsen in die Umgebung verspritzt werden. Soll andererseits die Luftfeuchtigkeit in dem Raum 2 erhöht werden, so kann das Kondensat dem Umluft- oder dem Zuluftstrom zugeführt werden und in diesem verdampft werden, beispielsweise durch Aufbringen auf die der Innenseite des Lüftungsgeräts zugewandte Seite des Radiators 13. Dadurch gelangt die aus der Luft in Form des Kondensats gewonnene Feuchtigkeit in den Raum 2 zurück. Zum Versprühen des Kondensats kann eine unterhalb des Kondensators 151 angeordnete Pumpe verwendet werden.

Der in den Figuren 3 bis 5 dargestellte Teil 151 des Wärmübertragungselements 15, der als Kondensator dienen kann, weist vorzugsweise eine glatte und eine berippte Seite auf. Da der Wärmeübergang bei Kondensation wesentlich größer ist als der Wärmeübergang gegenüber Luft, kann die Fläche des Wärmeübertragungselements 151 auf der Abluftseite wesentlich kleiner sein als auf der Zuluftseite. Vereist ein solcher Kondensator wird die Wärmeübertragung von selbst wieder schlechter und der Kondensator taut von selber wieder ab.

Der in den Figuren 3 bis 5 dargestellte Kondensator 152 kann vorzugsweise bewegt werden. Er kann schwenkbar oder verschiebbar gelagert sein oder so ausgelegt sein, dass er dem Lüftungsgerät entnommen und in einer anderen Ausrichtung wieder in dieses eingeführt werden kann. Soll ein Wärmeaustausch zwischen dem Außenluft- und dem Abluftstrom vermieden werden, so kann dieser gegenüber der in den Figuren gezeigten Position um 90° gedreht werden, wodurch dieser auf beiden Seiten, die den Luftströmen zugewandt sind, glatte Oberflächen aufweist und durch die Rippen, die sich dann zwischen diesen beiden Seiten befinden, eine Isolierung erzielt wird. Ist der Teil 151 des Wärmeübertragungselements 15 in dieser Position, kann das Lüftungsgerät daher ideal zur Kühlung des Raumes verwendet werden.

Eine Regelung der Luftströme und der Luftzusammensetzung kann bei dem Lüftungsgerät auf verschiedene Weisen erfolgen. Vorzugsweise wird die Regelung nach vorgegebenen Werten vorgenommen. So kann eine Regelung beispielsweise in Abhängigkeit einer in dem zu belüftenden Raum herrschenden CO₂-Konzentration erfolgen. Diese Konzentration wird an einer geeigneten Stelle in dem zu belüftenden Raum oder im Abluftstrom gemessen und bei einer zu hohen Konzentration wird der Luftdurchsatz des Lüftungsgeräts so geregelt, dass dieses Außenluft in das Lüftungsgerät ansaugt und als Zuluft in den Raum einführt. Die Regelung kann beispielsweise so ausgelegt sein, dass bei einer CO₂-Konzentration von mehr als 500 ppm die Belüftung einsetzt und eine vorbestimmte CO₂-Konzentration von beispielsweise 800 ppm nicht überschritten wird, da ab einem CO₂-Gehalt von 1000ppm in der Luft bei Personen, die sich in dem Raum aufhalten, Ermüdungserscheinungen zu erwarten sind.

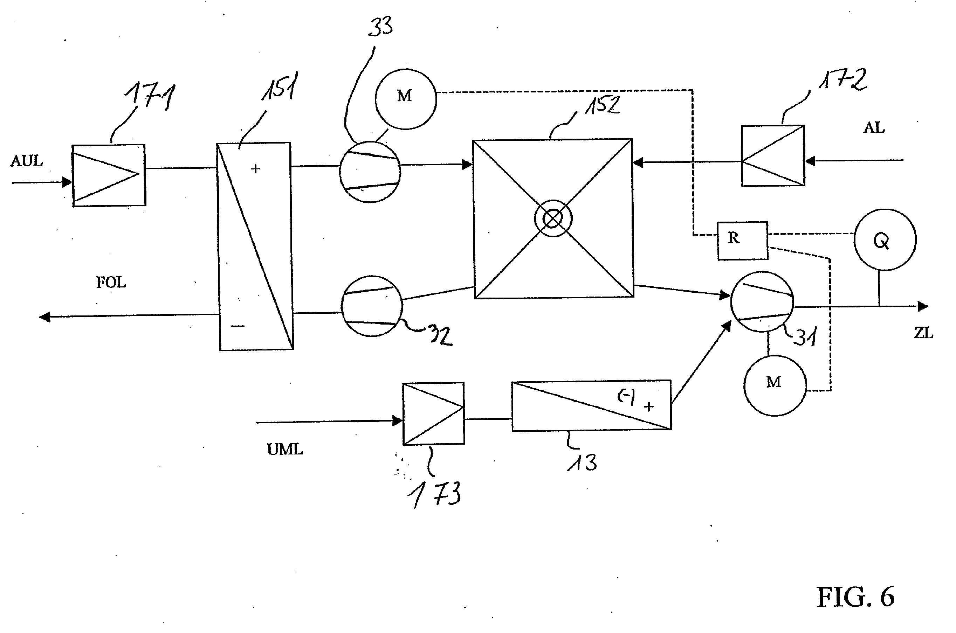

Auch eine Regelung nach der in dem Raum herrschenden Temperatur ist möglich, wobei in diesem Zusammenhang auf das weiter unten beschriebene, in Figur 6 dargestellte Ausführungsbeispiel verwiesen wird. Alternativ oder zusätzlich kann die Regelung des Lüftungsgeräts in Abhängigkeit der in dem Raum gemessenen Luftfeuchtigkeit erfolgen. Dadurch kann eine zu hohe Luftfeuchtigkeit, die zu Schimmelbildung in dem Raum führen kann, vermieden werden. Weitere mögliche Regelungen berücksichtigen die Tatsache, ob sich eine Person in dem Raum befindet, was über Anwesenheitsdetektoren erfasst werden kann, oder die Tatsache, ob Wind- und Sonnenstrahlungseinwirkungen vorliegen und wie stark diese sind. Weiterhin kann das Lüftungsgerät nach dem Lüftervolumenstrom, der für die Abluft und die Umluft gemessen wird, geregelt werden, beispielsweise auf einen vorgebbaren Wert. Dadurch wird eine wesentliche genauere Steuerung des Luftaustauschs ermöglicht als bei Verfahren aus dem Stand der Technik. Bei den letztgenannten wird nämlich auf einen konstanten Druck geregelt, beispielsweise auf eine Druckdifferenz vor und nach einem Ventilator. Diese ist jedoch von vielerlei Faktoren abhängig und nicht allein von dem Volumenstrom durch den Ventilator. Schließlich ist es auch möglich, das Lüftungsgerät mit einem Rechner zu verbinden, der permanent das Heizungsund Lüftungsverhalten optimiert.

Als Messvorrichtungen oder Detektionsvorrichtungen können bekannte Sensoren oder andere Einrichtungen verwendet werden, die vorzugsweise elektrisch leitend oder über Funk mit dem Lüftungsgerät gekoppelt sind.

Die Einstellung bestimmter Werte, die in dem Lüftungsgerät beispielsweise in einer Steuereinrichtung vorgegeben sein können, kann auf verschieden Arten erzielt werden. Bei der Ausgestaltung des Lüftungsgeräts, bei dem die Öffnungen, wie oben beschrieben angeordnet sind, kann beispielsweise die natürliche Strömung der Luft genutzt werden. So wird der Auftrieb der sich erwärmenden Zuluft genutzt, um diese in dem Lüftungsgerät nach oben steigen zu lassen und beim Strömen der Abluft durch das Wärmeübertragungselement 15, bei dem die Abluft Wärme abgeben kann, wird ein Abtrieb erzeugt, durch den die Luft zu der Austrittsöffnung für Fortluft gelangt. Auch bei der Umluft wird der natürliche Auftrieb in dem Lüftungsgerät genutzt. Die Abluft wird dadurch gegebenenfalls auch ohne Ventilatorenantrieb nach dem Heberprinzip in das Lüftungsgerät eingesaugt.

Darüber hinaus kann der Windeinfluß auf der Außenseite des Lüftungsgeräts, insbesondere auf die dort angeordneten Öffnungen, zur Unterstützung der Ventilatoren genutzt werden. Im Idealfall läßt sich dadurch die Energie, die durch die Ventilatoren aufgebracht werden muss, auf Werte von nahezu Null bringen. Damit geht der Vorteil einher, dass die Geräusche, die durch die Ventilatoren erzeugt werden, verringert werden. Optimal werden diese Vorteile bei einem Lüftungsgerät genutzt, das eine große Höhe von beispielsweise mehr als 1,50m aufweist.

Weiterhin kann die Regelung des Luftdurchsatzes durch das Lüftungsgerät durch Steuerung der Lüfter und Betätigung von Außenventilen erfolgen. Die Außenventile können insbesondere an oder in der Nähe der Öffnung 122 für die Regelung der Zuluft, der Öffnung 121 für die Regelung der Abluft oder der Öffnung 113 für die Regelung der Umluft vorgesehen sein. Wird beispielsweise ein Volumenstrom gemessen, der anzeigt, dass zuviel Außenluft in den Raum eingebracht wird, so kann der Zuluftventilator zunächst zurückgeschaltet, schließlich abgeschaltet werden. Tritt immer noch zu viel Luft ein, so kann das entsprechende Außenventil stufenweise geschlossen werden bis der einströmende Luftstrom in dem gewünschten Bereich liegt.

In Figur 6 ist in einem Blockdiagramm schematisch der Aufbau einer Ausführungsform des Lüftungsgeräts wiedergegeben, aus dem sich auch eine Möglichkeit der Steuerung des Gerätes ergibt.

Die Außenluft AUL tritt durch einen Filter 171 hindurch, um dann in dem Teil 151, der als Kondensator dient, einer Temperaturänderung unterzogen zu werden. Wird die Fortluft FOL, die auch durch den Kondensator 151 behandelt wird, in diesem abgekühlt, so kann man das Teil 151 als ein außenluftgekühlten Luftfeuchte-Kondensator bezeichnen. Nach dem Kondensator 151 wird die Außenluft über einen motorbetätigten Ventilator 33 in den Bereich 152 des Wärmeübertragungselements 15 geleitet, um eine Übertragung von Wärme der in einem Filter 172 gefilterten Abluft AL zu ermöglichen. Nach dem Verlassen des Wärmeübertragungselements 15 wird die behandelte Außenluft dem motorbetriebenen Ventilator 31 zugeführt, in dem diese mit der vom Filter 173 gefilterten und vom Radiator 13 erwärmten Umluft UML vermischt wird.

In der Figur 6 ist angedeutet, wie die Steuerung des Lüftungsgeräts nach der CO₂-Konzentration erfolgen kann. An der Stelle Q wird beispielweise die CO₂-Konzentration X_{CO2} gemessen. Das Messergebnis wird an den Regler R übermittelt, der daraufhin die Ventilatoren 33 und 31 steuert, bis ein vorgegebener X_{CO2}-Wert erzielt wurde. Eine Reduzierung der Leistung des Ventilators 33 führt zu einer reduzierten Zuführung von Außenluft und damit zu einer Erhöhung der CO₂-Konzentration im Innenraum. Eine Erhöhung der Leistung des Ventilators 31 führt zu einem höheren Anteil von Umluft in dem Luftstrom, der dem Raum zugeführt wird, und damit zu einer Verringerung der CO₂-Konzentration im Innenraum.

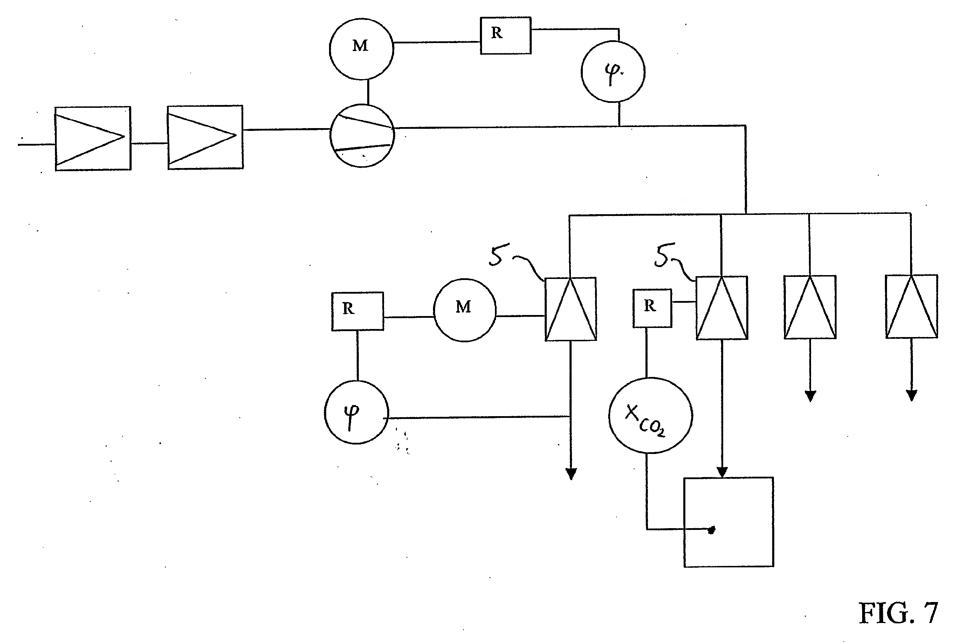

In Figur 7 wird schematisch dargestellt, wie eine Steuerung des Lüftungsgeräts nach dem Volumenstrom erfolgen kann. Im Gegensatz zu Konstantdruckregelungen, die bei herkömmlichen Lüftungsgeräten verwendet werden und einen reinen Druckvergleich zwischen verschiedenen Punkten in dem Lüftungsgerät durchführen, wird in dem erfindungsgemäßen Lüftungsgerät vorzugsweise der Volumenstrom gemessen und das Lüftungsgerät danach gesteuert. Dies weist den Vorteil auf, dass ein Sollwert vorgegeben werden kann, der mehrere Einflüsse berücksichtigt. So kann beispielsweise die CO₂-Konzentration, die Innenfeuchte, der Außendruck, etc. bei dem vorgegebenen Volumenstrom-Wert berücksichtigt werden. Eine solche Berücksichtigung äußerer Einflüsse ist bei einer Regelung nach dem Ergebnis eines Vergleichs von absoluten Drücken nicht möglich. Wie in Figur 7 gezeigt, werden zu diesem Zweck Volumenstromregler 5 verwendet, die beispielsweise mit einem Regler R ausgestattet sind, der die im dem Raum 2 an einer Messstelle gemessene CO₂-Konzentration X_{CO2} berücksichtigt, oder die mit einem Regler verbunden sind, der die gemessene Luftfeuchte ϕ, aufgenommen von einem oder mehreren Feuchtesensoren, berücksichtigt.

## Patentansprüche

1. Steuerungssystem für ein Lüftungsgerät (1) zur Belüftung eines Raums (2), **dadurch gekennzeichnet, dass** dieses zumindest eine Messeinrichtung (T, P) zum Messen momentaner Ist-Werte mindestens einer belüftungsrelevanten Größe und eine mit der Messeinrichtung verbundene Regelungseinheit (R) umfasst, die ausgelegt ist, um mindestens einen, in dem Lüftungsgerät (1) vorgesehenen Ventilator (31, 32, 33) und/oder mindestens ein Schließelement für eine in dem Lüftungsgerät vorgesehene Öffnung zu steuern.

2. Steuerungssystem nach Anspruch 1, **dadurch gekennzeichnet, dass** die Messvorrichtung einen Anwesenheitsdetektor umfasst.

3. Steuerungssystem nach Anspruch 2, **dadurch gekennzeichnet, dass** der Anwesenheitsdetektor in dem zu belüftenden Raum (2) angeordnet ist und mit dem Lüftungsgerät verbunden ist.

4. Steuerungssystem nach Anspruch 1, 2 oder 3, **dadurch gekennzeichnet, dass** die Messvorrichtung eine CO2-Messeinheit umfasst.

5. Steuerungssystem nach Anspruch 4, **dadurch gekennzeichnet, dass** die CO2-Messeinheit in dem zu belüftenden Raum (2) angeordnet ist.

6. Steuerungssystem nach einem der Ansprüche 1 bis 5, **dadurch gekennzeichnet, dass** die Messvorrichtung eine Feuchte-Messeinheit umfasst.

7. Steuerungssystem nach Anspruch 6, **dadurch gekennzeichnet, dass** die Feuchte-Messeinheit im Bereich der durch das Lüftungsgerät (1) ausgegebenen Zuluft vorgesehen ist.

8. Steuerungssystem nach einem der vorstehenden Ansprüche, **dadurch gekennzeichnet, dass** die Messvorrichtung eine Luftgeschwindigkeits-Messeinheit und/oder eine Windrichtungs-Messeinheit umfasst.

9. Steuerungssystem nach Anspruch 8, **dadurch gekennzeichnet, dass** die Luftgeschwindigkeits-Messeinheit an einer für die Luftzufuhr von außen vorgesehenen Öffnung (122) an der Außenseite (12) des Lüftungsgeräts (1) vorgesehen ist.

10. Steuerungssystem nach einem der vorstehenden Ansprüche, **dadurch gekennzeichnet, dass** die Messvorrichtung eine Sonnenstrahlungs-Messeinheit umfasst.

11. Steuerungssystem nach Anspruch 10, **dadurch gekennzeichnet, dass** die Sonnenstrahlungs-Messeinheit an der Außenwand des zu belüftenden Raums (2) vorgesehen ist.

12. Verfahren zur Steuerung eines Lüftungsgeräts zur Belüftung von Räumen, wobei in dem Lüftungsgerät mindestens ein Ventilator (31, 32, 33) und/oder mindestens ein Schließelement für eine in dem Lüftungsgerät angeordnete Öffnung (111, 112, 121, 122) angeordnet ist, wobei der mindestens eine Ventilator und/oder das mindestens eine Schließelement entsprechend momentaner Ist-Werte mindestens einer lüftungsrelevanten Größe, die mittels einer Messeinrichtung gemessen werden, gesteuert werden.

13. Verfahren nach Anspruch 12, **dadurch gekennzeichnet, dass** die von der Messeinrichtung gemessenen Werte einer Bearbeitung, insbesondere einem Vergleich mit vorgegebenen Soll-Werten, unterzogen werden und der mindestens eine Ventilator und/oder das mindestens eine Schließelement in Abhängigkeit des Ergebnisses der Bearbeitung gesteuert werden.

14. Verfahren nach einem der Ansprüche 12 oder 13, **dadurch gekennzeichnet, dass** der Volumenstrom von Luft in zumindest einem Strömungsweg des Lüftungsgeräts gemessen wird.
